# EUROPEAN PATENT APPLICATION

(11) **EP 2 916 286 A1**
(43) Date of publication of application: **09.09.2015**
(21) Application number: 14305322.1
(22) Date of filing: 06.03.2014
(51) Int. Cl.: G06T 5/00, G06T 7/00

(54) **Camera calibration method and apparatus using a color-coded structure**

(71) Applicant: Thomson Licensing, 92130 Issy-les-Moulineaux (FR)
(72) Inventor: Sorgi, Lorenzo, 30163 Hannover (DE)
(74) Representative: Schmidt-Uhlig, Thomas

(57) **Abstract**

A method and an apparatus (30) for camera calibration using a color-coded structure are described. The camera calibration method comprises: receiving (10) from a camera an image, in which a color-coded structure is captured; determining (11) a plurality of coordinate points in the image; and performing (12) camera calibration using the coordinate points. The color-coded structure includes at least two sets of patterns with different color channels.

## Description

### FIELD OF THE INVENTION

The invention relates to the field denoted as camera calibration, which collects algorithms and technologies aimed at the characterization of a mathematical model for the description of the image formation process of a camera. In particular, the invention discloses a camera calibration method and apparatus utilizing a color-coded structure.

### BACKGROUND OF THE INVENTION

One essential requirement for camera model estimation, namely camera calibration, is an input dataset of error-free correspondences between 3D coordinates of some points in the real world and their projection on one or within a set of calibration images. The input dataset can be generally acquired by capturing a calibration object on images and extracting the correspondences therefrom [I]. A great majority of the camera calibration algorithms proposed in literature and available on the market is denoted as metric calibration, where the notation metric highlights the explicit exploitation of a-priori known metric information of a 3D world scene. For such practice, a grid-like pattern is normally utilized because it is easily detectable, can be captured in form of single channel grayscale image, and can provide the required metric information needed for the metric camera calibration, i.e. a set of grid points and the coordinates thereof.

In parallel to the above leading trend, some researches have addressed a different approach for camera calibration which uses only non-metric geometrical objects. One exemplary practice for such approach is the collinearity of image points projected from a same 3D line [II, III]. These techniques provide at least two advantages: the unfavorite possibility of incorrect assignment of 3D world point coordinates is eliminated, and it becomes more effective to calibrate a camera especially for those with wide angle lenses, which easily result in distorted models.

A standard checkerboard, which is widely used as the source of a grid-like pattern, indeed satisfies the need for a metric calibration technique but however is not an optimal solution for the non-metric calibration approach. When it comes to a low level processing aimed at line estimation to detect a bundle of lines, the lines intersection of the checkerboard can result in a non-negligible disturbance for the data collection.

The non-metric calibration approaches have so far not found a great success in the field due to the difficulty to develop a mathematical formulation of the underlying estimation problem. In addition, there is a lack of a complete understanding of the related camera model indeterminacy. According to [IV], a complete Euclidean calibration using non-metric input data needs not only the enforcement of collinearity constraint but also the parallelism and the orthogonality among the 3D line bundles.

### SUMMARY OF THE INVENTION

Therefore, it is an objective of the present invention to propose an improved solution for camera calibration, which can eliminate the unfavorite disturbance from the line intersections of a grid-like structure, but at the same time maintain other requirements such as point collinearity, line parallelism and orthogonality. Specifically, this invention provides a solution for the integration of a bi-component calibration patterns within a single image using a color-coded structure.

According to the invention, a camera calibration method comprises:
- receiving from a camera an image, in which a color-coded structure is captured, wherein the color-coded structure includes at least two sets of patterns with different color channels;
- determining a plurality of coordinate points associated with the color-coded structure in the image; and
- performing camera calibration using the coordinate points.

Accordingly, a camera calibration apparatus comprises:
- an image reception unit configured to receive from a camera an image, in which a color-coded structure is captured, wherein the color-coded structure includes at least two sets of patterns with different color channels; and
- a camera calibration unit configured to determine a plurality of coordinate points associated with the color-coded structure in the image and to perform camera calibration using the coordinate points.

Also, a computer readable storage medium having stored therein instructions for camera calibration, which when executed by a computer, cause the computer to:
- receive from a camera an image, in which a color-coded structure is captured, wherein the color-coded structure includes at least two sets of patterns with different color channels;
- determine a plurality of coordinate points associated with the color-coded structure in the image; and
- perform camera calibration using the coordinate points.

### BRIEF DESCRIPTION OF THE DRAWINGS

For a better understanding the invention shall now be explained in more detail in the following description with reference to the figures. It is understood that the invention is not limited to this disclosed exemplary embodiments and that specified features can also expediently be combined and/or modified without departing from the scope of the present invention as defined in the appended claims. In the figures:
- Fig. 1: is a flow chart illustrating one preferred embodiment of the camera calibration method according to the present invention.
- Fig. 2: is a flow chart illustrating another preferred embodiment of the camera calibration method according to the present invention.
- Fig. 3: shows an exemplary color-coded structure used in one preferred embodiment of the camera calibration method of this invention.
- Fig. 4: is a flow chart illustrating one exemplary preferred embodiment of the camera calibration method according to this invention.
- Fig. 5: shows results obtained by the exemplary preferred embodiment of the camera calibration method shown in Fig. 4.
- Fig. 6: shows more results obtained by the exemplary preferred embodiment of the camera calibration method shown in Fig. 4.
- Fig. 7: is a schematic diagram illustrating an apparatus configured to perform the camera calibration method according to this invention.

### DETAILED DESCRIPTION OF PREFERRED EMBODIMENTS

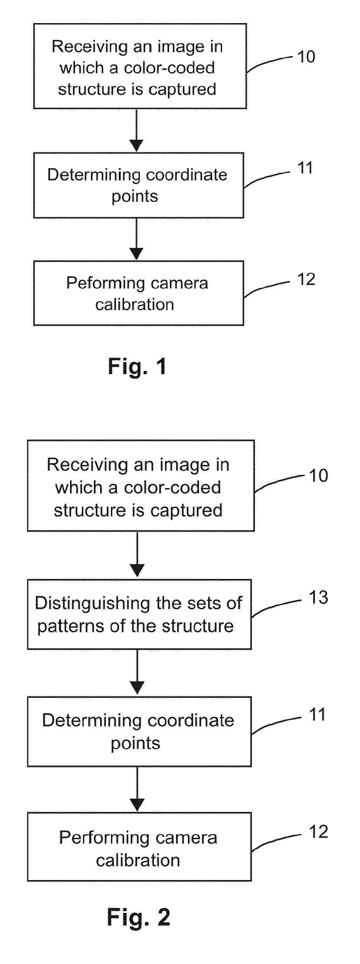

Fig. 1 schematically illustrates a camera calibration method according to the present invention, which comprises: receiving 10 from a camera an image, in which a color-coded structure is captured, wherein the color-coded structure includes at least two sets of patterns with different color channels; determining 11 a plurality of coordinate points associated with the color-coded structure in the image; and performing 12 camera calibration using the coordinate points. The color-coded structure can be any kind of structure which includes at least two sets of patterns with different color channels. For example, the color-coded structure can be a color-coded graph which is displayed on a 2D surface captured by the camera. Similarly, the set of patterns can be any kind of patterns, for example, parallel lines or parallel stripes.

Optionally, the method of this invention can further comprise distinguishing 13 the at least two sets of patterns of the color-coded structure, and thus determining 11 respectively a subset of coordinate points for each set of patterns, which is as shown in Fig. 2. In this case, each subset of coordinate points is associated with the corresponding set of patterns of the color-coded structure.

In addition, the camera calibration method of this invention can also optionally comprise: receiving 10 from the camera a plurality of images, in each of which the color-coded structure is captured; and determining 11 a plurality of coordinate points for each of the images. The result of camera calibration can be improved and is more precise when more than one image is captured and used.

The determination and collection of the coordinate points, which is generally denoted as a calibration dataset, is aimed at the identification of the calibration object (i.e. the color-coded structure in this invention) within each image. This implies the detection of a set of image features and the establishment of correspondences between these and the source features on the calibration object.

In the following one exemplary preferred embodiment of the method of this invention will be described and explained in detail. It should be noted that, when repeated description and detailed descriptions of well-known functions or configurations may make unnecessarily obscure the gist of the present invention, the detailed description will be omitted.

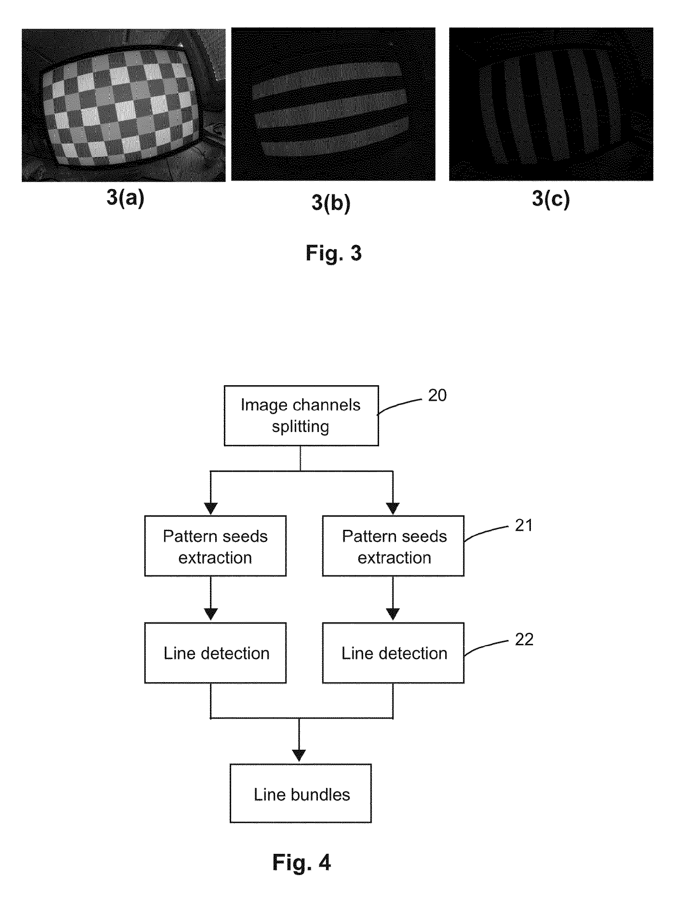

Fig. 3(a) shows an exemplary color-coded structure used in the preferred embodiment, which is a color-coded graph including two sets of patterns. Each of the two sets of patterns is respectively a bundle of parallel stripes, and the color channels of the two bundles are different. Preferably, the two bundles of parallel stripes are mutually orthogonal. For example, as shown in Figs. 3(b) and 3(c), the horizontal bundle of parallel strips is in red and the vertical bundle is in blue. The colors used here to build the basic pattern block, e.g., red and blue, are chosen in order to ease the auto white balance of the camera. The proposed color-coded structure produces an average color of a gray tone. This is an advantage as it meets the gray-world assumption of most of the automatic white balance algorithms, which thus allows for a successful collection of good calibration views for both outdoor and indoor situations. For the color-coded graph used in this preferred embodiment, the number of bundles of lines, the color channel of each bundle, and the relative angle between any two bundles are of course flexible and can be adjusted depending on different demands and situations.

The color-coded graph can be simply shown on a screen and captured by a camera to be calibrated from different positions and under different orientations. These captured images provide the initial calibration image dataset. By acquiring the image dataset, a plurality of coordinate points in the images, i.e. a calibration dataset, can be extracted for a subsequent camera calibration process.

In this exemplary preferred embodiment, a light user-assisted ad-hoc algorithm is designed for the extraction of the calibration dataset. An image exploration tool based on image exploration with the Gauss-Laguerre Circular Harmonic Filters (GL-CHF) of order and degree (1,0) is used, which has been tested as a robust detector even in presence of high level of image noise [V]. It is a complex valued steerable filter derived from the corresponding GL function and is specifically tailored for the detection of step-like image features. Filters belonging to this family exhibit scale-rotation invariance properties and discrimination capability for different image features. [VI, VII, VIII]. This algorithm eases the collection of an input dataset for the non-metric camera calibration, of which the representative steps are illustrated in Fig. 4.

The two sets of patterns with different color channels are firstly split 20, followed by performing the pattern detection (21, 22) respectively on the red and blue channel of each image.

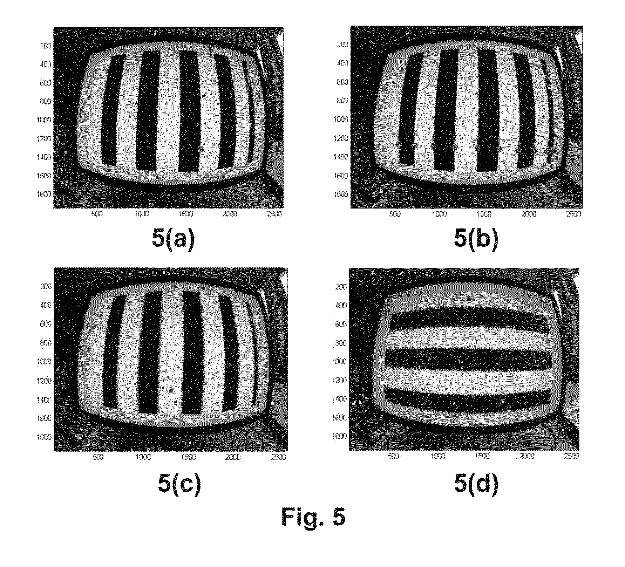

Referring to Fig. 5(a), an initial extraction 21 of a seed point for each line of the patterns of parallel stripes is performed. The pixel location providing the highest magnitude response against the image exploration filter is determined as the initial seed point, which is assumed to be a pixel point located on a target line. A corresponding line direction is extracted from the phase of the pixel response. A set of collinear seeds of a bundle of parallel lines are then searched on the graph, as shown in Fig. 5(b). An image slice going through the detected seed point and being orthogonal to the detected line direction is inspected. All the local maxima of the magnitude of the filter response are selected as potential seed points of the lines comprised in the specific pattern. Similar to the initial seed point, the line direction of each selected seed point is extracted from the phase of the pixel response.

Referring to Fig. 4, the extraction 22 of the corresponding line set is then performed by expansion of the selected seed points. Each seed point is expanded by means of an edge-walking technique, which can be any known techniques in the field. Finally, in order to increase the edge localization accuracy, the detected lines are refined to sub-pixel accuracy using the area-based edge tracking algorithm proposed in [IX]. The selected edge points of each of the detected lines are extracted as the calibration dataset.

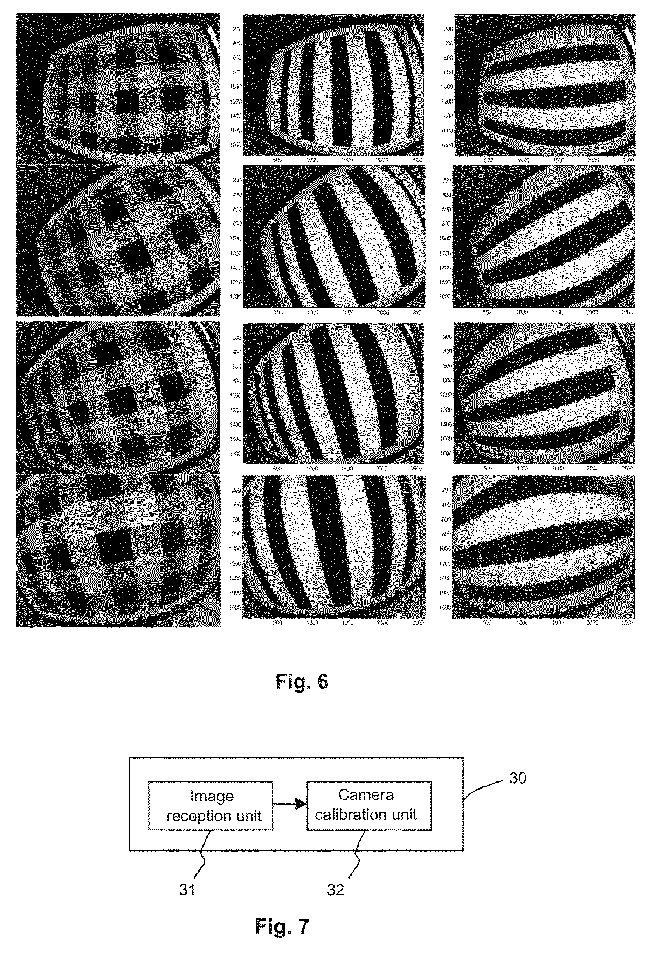

As previously described and shown in Fig. 4, the above procedure of extraction of a calibration dataset is applied independently and respectively to the two sets of patterns of parallel stripes. Two calibration datasets of orthogonal bundles of lines are eventually extracted as shown in Figs. 5(c) and 5(d). Fig. 6 provides further exemplary results of the extraction of calibration datasets obtained from a plurality of calibration images.

According to the present invention, a new color-coded structure is specifically designed, which includes at least two distinct sets of patterns of different color channels, e.g., the two bundles of parallel stripes. The sets of patterns can be embedded in a single calibration image to satisfy simultaneously the constraints required for camera calibration together with a high degree of detectability.

In the exemplary case of two bundles of parallel stripes, the structure can provide the geometrical constraints requires by the line-based non-metric calibration technique, as the visual content is significantly enhanced by removing the line segment intersections. Taking advantage of the specific structure of the new pattern, a dedicated detector is defined, which is able to retrieve the line bundle from highly distorted views by means of a local gradient-driven image exploration. The method of the present invention therefore allows the edge detector to extract with high accuracy uncrossed lines from the input image dataset, which implicitly carry point collinearity, line parallelism and line bundles orthogonality clues.

An apparatus 30 configured to perform the camera calibration method according to the present invention is schematically depicted in Fig. 7. The apparatus 30 comprises an image reception unit 31 and a camera calibration unit 32. The image reception unit 31 is configured to receive 10 from a camera an image, in which a color-coded structure is captured. The color-coded structure includes at least two sets of patterns with different color channels. The camera calibration unit 32 is configured to determine 11 a plurality of coordinate points associated with the color-coded structure in the image and to perform 12 camera calibration using the coordinate points. Optionally, the camera calibration unit 32 is also configured to distinguish 13 the at least two sets of patterns of the color-coded structure and to determine 11 respectively a subset of coordinate points for each set of patterns of the color-coded structure.

### REFERENCES

[I] Joaquim Salvi, Xavier Armangué, Joan Batlle, A comparative review of camera calibrating methods with accuracy evaluation, Pattern Recognition, Volume 35, Issue 7, July 2002, Pages 1617-1635.
[II] Devernay and Olivier Faugeras. 2001. Straight lines have to be straight: automatic calibration and removal of distortion from scenes of structured enviroments. Mach. Vision Appl. 13, 1 (August 2001), 14-24
[III] R. Swaminathan and S. K. Nayar. Non-Metric Calibration of Wide-Angle Lenses and Polycameras. IEEE Transactions on Pattern Analysis and Machine Intelligence. 2000. 22: 1172-1178.
[IV] Kenichi Kanatani: Calibration of Ultrawide Fisheye Lens Cameras by Eigenvalue Minimization. IEEE Trans. Pattern Anal. Mach. Intell. 35(4): 813-822 (2013)
[V] G. Jacovitti, A. Neri, Multiresolution circular harmonic decomposition. IEEE Transactions on Signal Processing. 12/2000.
[VI] M. GOFFREDO, S. CONFORTO, M. SCHMID, A. NERI, T. D'ALESSIO, "Markerless evaluation of sit-to-stand strategy in Gauss-Laguerre domain", XVI Congress of the International Society of Electrophysiology and Kinesiology (ISEK2006), Torino, Italy, 2006
[VII] M. Carli, F. Coppola, A. Neri "Translation, Orientation and Scale Estimation Based on Laguerre-Gauss Circular Harmonic Pyramids", in Image Processing: Algorithms and Systems, Proc. SPIE Vol. 4667, Electronic Imaging 2002, 20-25 January 2002, San Jose, California USA
[VIII] L. SORGI N. CIMMINIELLO, NERI A. (2006). Keypoints Selection in the Gauss Laguerre Transformed Domain. In: BMVC06 Proceedings. Edinburgh, September 4-7 2006, BMVC 2006, vol. II, p. 539-548
[IX] L. Sorgi, Edgelet tracking using Gauss-Laguerre Circular Harmonic filters, 18th IEEE International Conference Image Processing (ICIP), 2011: 2897-2900

## Claims

1. A camera calibration method, comprising:
- receiving (10) from a camera an image, in which a color-coded structure is captured, wherein the color-coded structure includes at least two sets of patterns with different color channels;
- determining (11) a plurality of coordinate points associated with the color-coded structure in the image; and
- performing (12) camera calibration using the coordinate points.

2. The method according to claim 1, further comprising:
- distinguishing (13) the at least two sets of patterns of the color-coded structure; and
- determining (11) respectively a subset of coordinate points for each set of patterns of the color-coded structure.

3. The method according to claims 1 or 2, comprising:
receiving (10) from the camera a plurality of images, and determining (11) a plurality of coordinate points for each of the images.

4. The method according to claim 1, wherein the color-coded structure includes two sets of patterns with different color channels, each of the two sets of patterns being respectively a bundle of parallel stripes.

5. The method according to claim 4, wherein the two bundles of parallel stripes are orthogonal.

6. The method according to claim 4, further comprising:
- distinguishing (13) the two sets of patterns of the color-coded structure; and
- determining (11) respectively a subset of coordinate points for each set of patterns of the color-coded structure.

7. The method according to claim 6, wherein, for each set of patterns, the subset of coordinate points are positioned along the sides of the bundle of parallel stripes.

8. The method according to claim 1, wherein the color-coded structure is a color-coded graph.

9. A camera calibration apparatus, comprising:
- an image reception unit (31) configured to receive from a camera an image, in which a color-coded structure is captured, wherein the color-coded structure includes at least two sets of patterns with different color channels; and
- a camera calibration unit (32) configured to determine a plurality of coordinate points associated with the color-coded structure in the image and to perform camera calibration using the coordinate points.

10. The apparatus according to claim 9, wherein the camera calibration unit (32) is configured to distinguish the at least two sets of patterns of the color-coded structure and to determine respectively a subset of coordinate points for each set of patterns of the color-coded structure.

11. A computer readable storage medium having stored therein instructions for camera calibration, which when executed by a computer, cause the computer to:
- receive from a camera an image, in which a color-coded structure is captured, wherein the color-coded structure includes at least two sets of patterns with different color channels;
- determine a plurality of coordinate points associated with the color-coded structure in the image; and
- perform camera calibration using the coordinate points.
